# EUROPÄISCHE PATENTSCHRIFT

(11) **EP 1 493 315 B1**
(45) Veröffentlichungstag und Bekanntmachung des Hinweises auf die Patenterteilung: **28.11.2012**
(21) Anmeldenummer: 04015438.7
(22) Anmeldetag: 01.07.2004
(51) Int. Cl.: A01B 73/06, A01D 78/10

(54) **Heuwerbungsmaschine**
Hay making machine
Machine de fenaison

(30) Priorität: 04.07.2003 DE 10330386
(43) Veröffentlichungstag der Anmeldung: 05.01.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Leifeling, Karl, Dipl.-Ing., 48477 Hörstel-Bevergern (DE); Spree, Christian, Dipl.-Ing., 49584 Fürstenau (DE)

(56) Entgegenhaltungen:
- EP-A- 0 607 578
- CA-B- 1 151 431
- DE-A- 4 329 647
- DE-A- 19 948 245
- DE-U- 29 806 043

## Beschreibung

Die Erfindung bezieht sich auf eine Heuwerbungsmaschine, insbesondere zum Zetten und Wenden von Halmgut, mit an einem Maschinenbalken angeordneten und über zumindest ein von einer Stellvorrichtung verschwenkbares Stützrad auf dem Boden abgestützten Arbeitskreiseln, wobei ein Maschinenbalken aus einer beispielsweise sich quer zur Fahrtrichtung erstreckenden Arbeitsstellung in eine im wesentlichen parallel zur Fahrtrichtung ausgerichtete Transportstellung überführbar ist (siehe z.B. CA 1 151 431).

Bekannt ist aus der DE 298 06 043 U1 eine Landmaschine, bei der mit Lauf- und Stützrädern versehene seitliche Maschinenbalken zur Verringerung der Arbeitsbreite nach hinten eingeschwenkt werden können. Das Umstellen der Lauf- und Stützräder von einer Betriebsleitung in eine andere wird hierbei über ein vom Fahrersitz betätigbares Stellglied, realisiert. So können die Lauf- und Stützräder um 90° verschwenkt werden.

Da für den landwirtschaftliche Markt immer flexiblere Arbeitsmaschinen verlangt werden, gibt es bei der soeben beschriebenen Heuwerbungsmaschine erhebliche Nachteile.

Der Fahrer der Heuwerbungsmaschine muss selbständig darauf achten, daß er die Stützräder von einer Transport- in eine Arbeitsstellung verschwenkt. Somit muss der Fahrer bei der Umstellung von einer Transport- in eine Arbeitsposition der Heuwerbungsmaschine einen genau definierten Zeitplan einhalten, der sowohl Zeit als auch in einem besonderen Maße Aufmerksamkeit erfordert. Ein weiterer Nachteil bei dem beschriebenen Kreiselzettwender ist die Tatsache, daß lediglich zwei Betriebsstellungen vorwählbar und maximal ein Schwenkwinkel von 90° der Stützrädern erreicht werden kann.

Der Erfindung liegt die Aufgabe zugrunde, eine Heuwerbungsmaschine zu schaffen, bei der bei Arbeiten am Hang sowie auch im Grenzstreubereich Heuwerbungsarbeiten sicher und leicht zu vollziehen sind, und die insbesondere leicht und flexibel gehandhabt werden kann.

Gelöst wird diese Aufgabe bei einer Heuwerbungsmaschine der eingangs genannten Art wie sie in den Patentansprüchen gekennzeichnet ist dadurch, daß ein von der Stellvorrichtung verschwenkbares Stützrad um seine im wesentlichen vertikale Schwenkachse innerhalb eines Lenkwinkelbereiches von größer 90° auf vorgebbare Lenkwinkel einstellbar und in dieser Lenkwinkelstellung arretierbar ist.

Damit ist eine Heuwerbungsmaschine geschaffen, bei der durch die Einstellbarkeit und damit die steuerbare Lenkung des Stützrades um die im wesentlichen vertikale Schwenkachse ein seitlicher Maschinenbalken auch zum Beispiel im Grenzstreubereich auf eine Maschinenbalkenausrichtung zur Fahrtrichtungsachse hin einstellbar ist, die kleiner 90° ist, so daß Arbeitskreisel nicht in einem Bereich außerhalb der Grenze hin fördern, sondern das Halmgut sicher im Bergungsbereich abgelegt werden kann. Auch während der Hangfahrt lassen sich die schwenkbaren Stützräder derart einstellen, daß die Stützräder die Hangneigung und die damit einhergehenden auftretenden Kräfte zu kompensieren helfen, indem sie der Neigung entsprechend relativ zum seitlichen Maschinenbalken angestellt werden. Dabei ist ein Schwenkwinkel von größer 90° sowohl für eine Fahrtrichtung als auch für eine entgegengesetzte Fahrtrichtung möglich. Ebenfalls ist es möglich, auch bei sehr großen Arbeitsbreiten den Maschinenbalken insgesamt in diagonaler Ausrichtung zur Fahrtrichtung bzw. zu einem landwirtschaftlichen Schlepper hin auszurichten und von der Bedienperson steuerbar und in der jeweiligen angesteuerten Position arretierbar die Stützräder einzuschwenken bzw. in ihre Lenkposition zu bringen.

Hinsichtlich wesentlicher weiterer Ausgestaltungen der Erfindung wird auf weitere Unteransprüche, die nachfolgende Beschreibung und die Zeichnung verwiesen. In der Zeichnung zeigen:
- Fig. 1: eine Heuwerbungsmaschine in Arbeitsstellung gemäß der Erfindung mit einem vorgeordneten Schlepper;
- Fig. 2: eine Heuwerbungsmaschine in Transportstellung mit vorgeordnetem Schlepper, wobei sich die gelenkten Stützräder noch in Arbeitsstellung befinden,
- Fig. 3: ein Schaltbild der Steuerungsvorrichtung zum automatischen Verschwenken der Räder,
- Fig. 4: eine perspektivische Ansicht eines Teils der Heuwerbungsmaschine mit den in Fahrtrichtung geschwenkten, gelenkten Stützrädern,

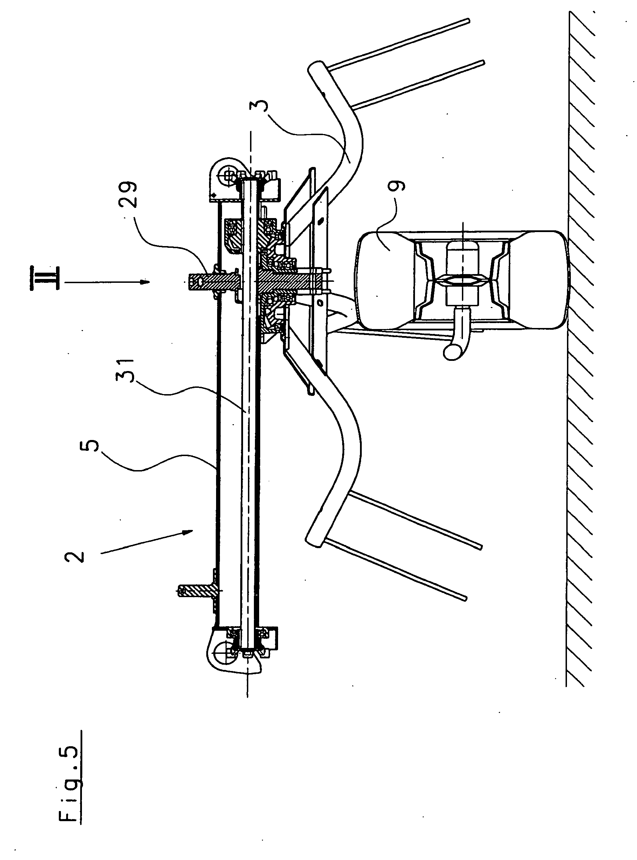

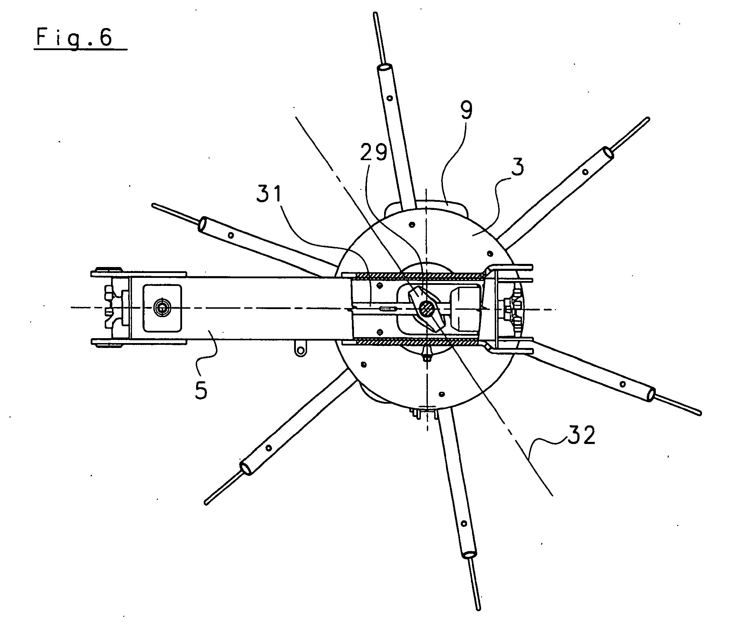

- Fig. 5: einen Vertikalschnitt entlang der Kreiselrechenantriebswelle (31) (Fig. 6 bis 9),
- Fig. 6: eine Draufsicht gem. II (Fig. 5), teilweise geschnitten, mit quer zum Maschinenbalken und in Arbeitsstellung befindlichem Stützrad,
- Fig. 7: eine Draufsicht nach II (Fig. 5), teilweise geschnitten, mit einem gelenkten Stützrad in einer Grenzstreuposition,
- Fig. 8: eine Draufsicht nach II (Fig. 5), teilweise geschnitten, mit einem gelenkten Stützrad in einer weiteren Grenzstreuposition,
- Fig. 9: eine Draufsicht nach II (Fig. 5), teilweise geschnitten, mit einem Stützrad in Transportstellung.

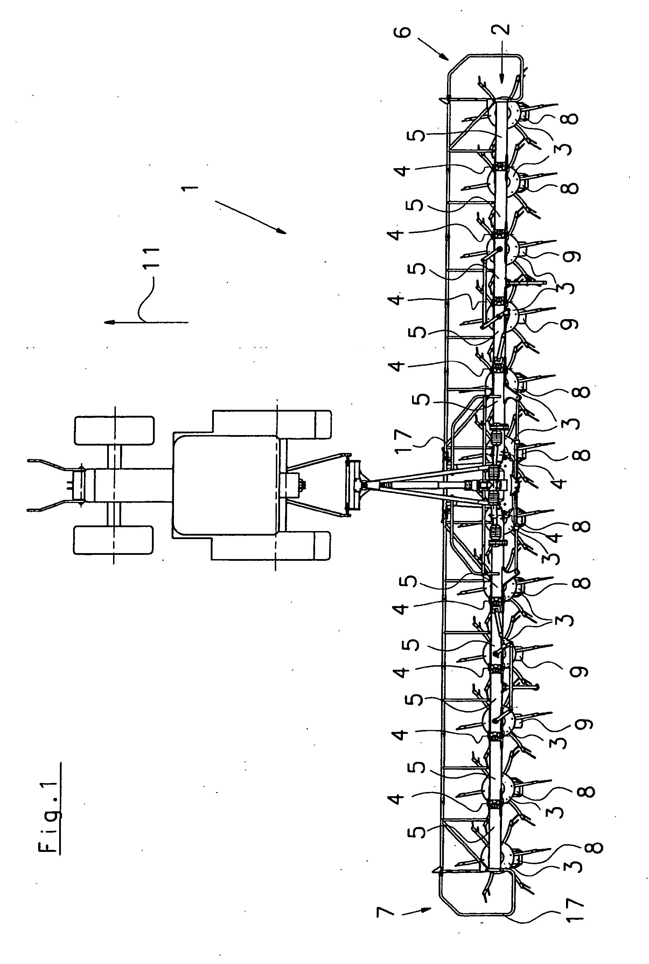

Fig. 1 zeigt einen nicht näher gekennzeichneten Schlepper, dem die Heuwerbungsmaschine 1 angehängt ist. Der Maschinenbalken 2, an dem die über Stützräder 8, 9 abgestützten Arbeitskreisel 3 angebracht sind, ist durch horizontale Schwenkachsen 4 in Einzeltragbalken 5 unterteilt. Die rechten und linken seitlichen Maschinenbalken 6 und 7 weisen bei dieser Ausführungsform der Erfindung jeweils sechs Arbeitskreisel 3 auf. Auf diese Art und Weise wird eine Arbeitsbreite von rund 13 m realisiert. Den Arbeitskreiseln 3 sind pro Seitenbalken 6, 7 vier ungelenkte, nachlaufende Stützräder 8, sowie jeweils zwei gelenkte, weitere Stützräder 9 zugeordnet. Die gelenkten Stützräder 9 sind bei einer Heuwerbungsmaschinen mit einer solch großen Arbeitsbreite, die sich dann auch in einer großen Längserstreckung des Fahrzeuges in Transportstellung niederschlägt, von großem Vorteil für die Stabilität der gesamten Maschine.

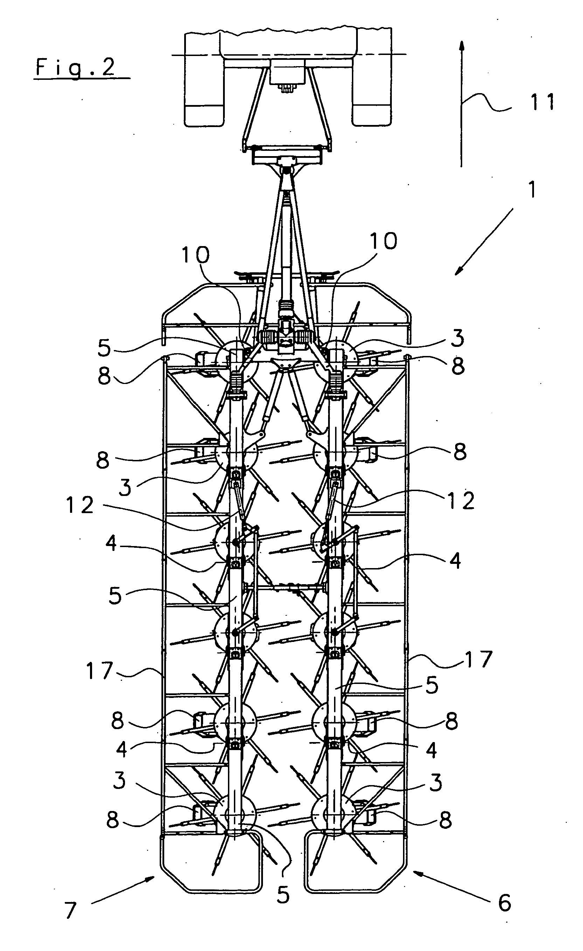

Zur Verschwenkung des Maschinenbalkens 2, bzw. seiner seitlichen Maschinenbalken 6 und 7, in die Transportstellung werden die seitlichen Maschinenbalken 6 und 7 um eine in etwa vertikale Achse 10 in eine Transportstellung parallel zur Fahrtrichtung 11 geschwenkt. Zur besseren Übersichtlichkeit sind in den Figuren nicht mehr alle identischen Einzelteile oder Einzelteile mit identischen Funktionen beziffert. Die nachlaufenden und ungelenkten Stützräder 8 stehen zu diesem Zeitpunkt, wie in Figur 2 dargestellt, genauso wie die nur geringfügig sichtbaren gelenkten Stützräder 9 in einer Stellung quer zur Fahrtrichtung 11.

Aufgrund eines von einer Steuerungsvorrichtung ausgehenden Signals, z. B. einem erhöhten Öldruck, werden bei einer erfindungsgemäßen Ausbildung einer Heuwerbungsmaschine die gelenkten Stützräder 9 in eine Laufrichtung parallel zur Fahrt- und Transportrichtung 11 eingeschwenkt. Die das Steuerungssignal erhaltenden Stellmittel zur Verschwenkung der Stützräder 9 sind bei diesem Ausführungsbeispiel der Erfindung doppelt wirkende Hydraulikzylinder 12. Denkbar sind hier auch eine Vielzahl anderer Stellmittel beispielsweise Motoren. Je nach Druckbeaufschlagung können diese Zylinder 12 automatisch die für eine Transport- oder Arbeitsstellung notwendige Kolbenposition erreichen. Dem Bedienpersonal einer solchen Heuwerbungsmaschine 1 wird durch die automatische Umlenkung der Räder 9 Arbeit abgenommen, es kann seine Aufmerksamkeit auf die mit großer Arbeitsbreite ausgestattete Heuwerbungsmaschine 1 im Ganzen richten und somit in kürzerer Zeit als bislang mit seiner Arbeit fortfahren. Ein weiterer Vorteil des doppelt wirkenden Zylinders 12 ist die konstruktiv einfache Ausgestaltung des Stellmechanismusses, der gemäß dem Stand der Technik eine komplexere Anordnung von Zylinder mit zugehöriger Feder bedeutete.

Um eine für eine Straßenfahrt deutlich verbesserte Spurstabilität zu erreichen, sind pro seitlichem Maschinenbalken 6, 7 in Transportstellung die gelenkten Stützräder 9 in der Mitte der bei diesem Ausführungsbeispiel insgesamt sechs vorhandenen Stützräder 8, 9 angebracht. Sollte es sich bei den an einem seitlichem Maschinenbalken 6, 7 befindlichen Stützräder um eine ungerade Anzahl handeln, wobei die Anzahl der gelenkten Stützräder 9 gerade ist, so ist aus den selben Gründen die Anzahl der ungelenkten Stützräder 8 in Fahrtrichtung vor den gelenkten Stützrädern 9 größer als die der in Fahrtrichtung hinter den gelenkten Stützrädern 9 liegenden nachfolgenden und ungelenkten Stützräder 8.

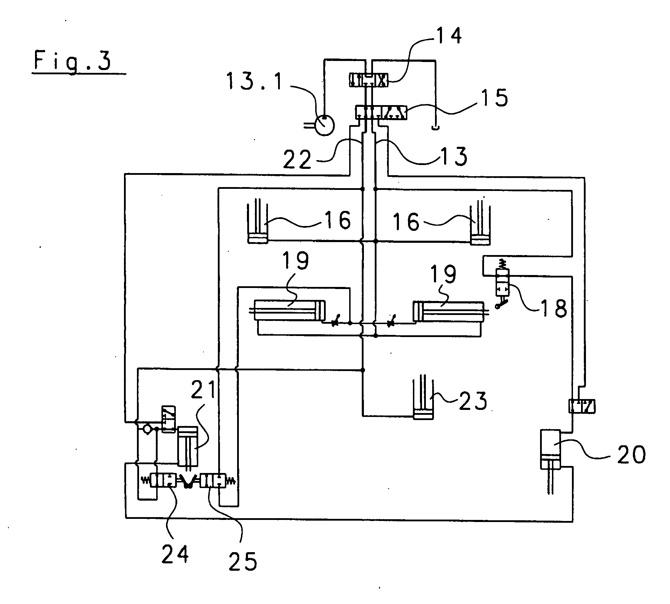

Der in Fig. 3 dargestellte Schaltplan offenbart die zum Erreichen der Transport- oder Arbeitsstellung notwendigen und jeweils gleichzeitig bzw. nacheinander ablaufenden Prozesse. Eine Druckbeaufschlagung der Leitung 13 mit Hilfe der Pumpe 13.1 und den der entsprechenden Stellungen der Ventile 14 und 15 bewirkt zunächst einmal eine Beaufschlagung der Entriegelungszylinder 16. Hierdurch werden die nicht näher dargestellten Verriegelungen des in Fig. 1 dargestellten und in Arbeitsstellung befindlichen Zugstangenelements, bzw. der Rahmenteile 17 gelöst. Da das Ventil 18 bei ausgefahrenen Schwenkzylindern 19 in Sperrstellung steht, werden in diesem Fall die Schwenkzylinder 19 mit Druck beaufschlagt, so daß die beiden seitlichen Maschinenbalken 6 und 7 aus der Arbeitsstellung in die Transportstellung verschwenkt werden. Sobald die seitlichen Maschinenbalken 6, 7 die Transportstellung erreicht haben, erfolgt eine Umschaltung des Ventils 18 aus der Sperrstellung in einer Durchgangsstellung. Dadurch wird die Ölzufuhr zum Lenkzylinder 20 und nachfolgend zum Lenkzylinder 21, die beide dem Hydraulikzylinder 12 entsprechen, freigegeben. Somit sorgen die Lenkzylinder 20, 21 für eine Verschwenkung der Stützräder aus einer Arbeits- in eine Transportstellung.

Umgekehrt erfolgt die Verschwenkung der seitlichen Maschinenbalken 6, 7 aus der Transportstellung in die Arbeitsteilung durch eine Druckbeaufschlagung der Leitung 22. Zunächst wird ein Entriegelungszylinder 23 zum Entriegeln der Transportverriegelung betätigt. Durch die gleichzeitige Druckbeaufschlagung des Lenkzylinders 21 mit dem nachfolgenden Lenkzylinder 20 werden die gelenkten Stützräder 9 in die Arbeitsstellung geschwenkt. Nachdem der Lenkzylinder 21 einen vorbestimmten Weg ausgefahren ist, wird über das Ventil 24 die Ölzufuhr zum Lenkzylinder 21 unterbrochen und über das angehängte Ventil 25 die Ölzufuhr zu den Schwenkzylindern 19 freigegeben. Somit werden die seitlichen Maschinenbalken 6, 7 in die Arbeitsstellung der Heuwerbungsmaschine verschwenkt. Diese Schaltung gemäß der Erfindung vereinfacht die Handhabung der Heuwerbungsmaschine für das Bedienpersonal in erheblichem Umfang. Da die Heuwerbungsmaschine 1 gemäß der Erfindung auf vorgebbare Lenkwinkel einstellbar ist, erfolgt auch die Verschwenkung aus der Transportstellung in die verschiedenen Arbeitsstellungen, beispielsweise Grenzstreupositionen, automatisch.

Bei einer weiteren Ausbildung einer Heuwerbungsmaschine gemäß der Erfindung sind die an sich bekannten Rahmenteile 17 als Zugstangenelement zur Aufnahme von in oder gegen die Fahrtrichtung auf den Maschinenbalken 2 wirkenden Kräften ausgebildet. Erfindungsgemäß sind die Enden der Lenkstange 26 über Kugelgelenke 27 mit den Hebelarmen 28 der in etwa vertikalen Schwenkachsen 29 der gelenkten Stützräder 9 verbunden. Die somit gemeinsam gelenkten Stützräder 9 stabilisieren sich daher gegenseitig. Die Kugelgelenke 27 sind in Transportstellung in einer Flucht mit den horizontalen Schwenkachsen 4, was Vertikalbewegungen der Einzeltragbalken kompensiert und somit wiederum zu erhöhter Spurstabilität beiträgt. Gleichzeitig liegen die Gelenke 30 der Rahmenteile 17 auf den jeweils identischen horizontalen Schwenkachsen 4. Die bei der Straßenfahrt möglichen Geschwindigkeiten zwischen 40 und 50 km/h führen trotz der Vertikalbewegungen der Einzeltragbalken 5 aufgrund der Gelenke 30 und 27 nicht zu Lenkausschlägen der Stützräder 9 und bilden somit eine für auch hohe Fahrgeschwindigkeiten geeignete Heuwerbungsmaschine 1. Somit ist diese erfindungsgemäße Heuwerbungsmaschine 1 von hoher Mobilität und Flexibilität.

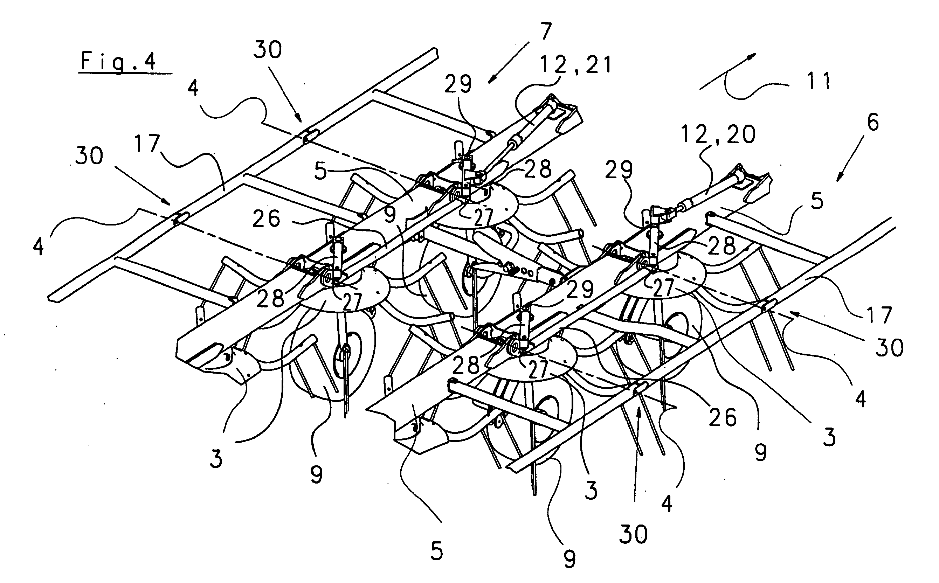

In Transportstellung stehen die gelenkten Räder 9, wie in Fig. 4 gezeigt, in einer zur Fahrtrichtung 11 parallelen Ausrichtung. Da pro seitlichem Maschinenbalken 6, 7 jeweils zwei gelenkte Stützräder 9 gemeinsam angelenkt und Unebenheiten in der Fahrbahn, die ein Stützrad erfassen, durch das andere Stützrad mit aufgefangen werden, erhöht sich durch die Kopplung zusätzlich die Stabilität der Heuwerbungsmaschine.

Die gelenkten Stützräder 9 können über die Lenkzylinder 12 in jede beliebige Lenkwinkelstellung zwischen 0° und 90° sowie auch größer 90° gebracht und dort arretiert werden. Dies kann vom Fahrer gesteuert vorgenommen werden, so daß er die Maschinenbalken schräg zur Fahrtrichtung ausrichten kann, z.b. im Grenzstreubereich. Bei Hangfahrten kann er die Stützräder 9 verstellen, um die Hangneigung zu berücksichtigen und zwecks Stabilisierung der Maschine bei der Arbeitsfahrt eine gegen den Hangabtrieb gerichtete Kraft hervorzurufen.

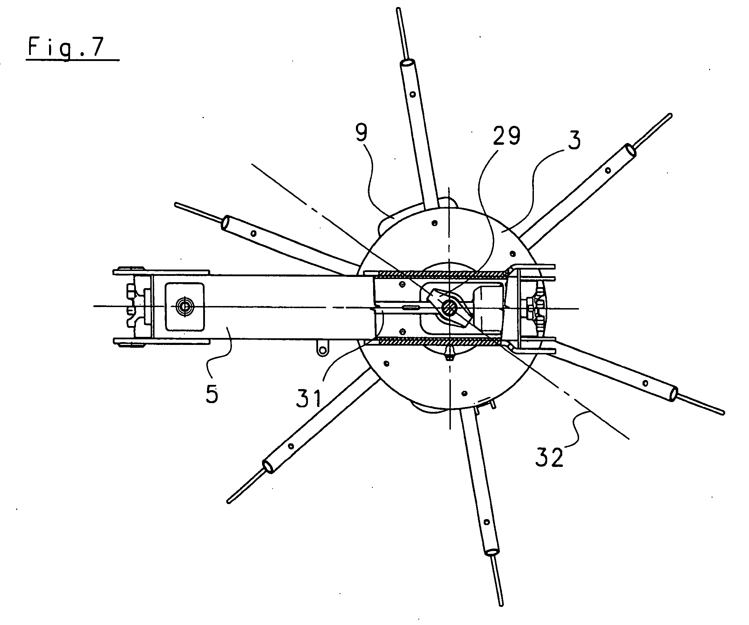

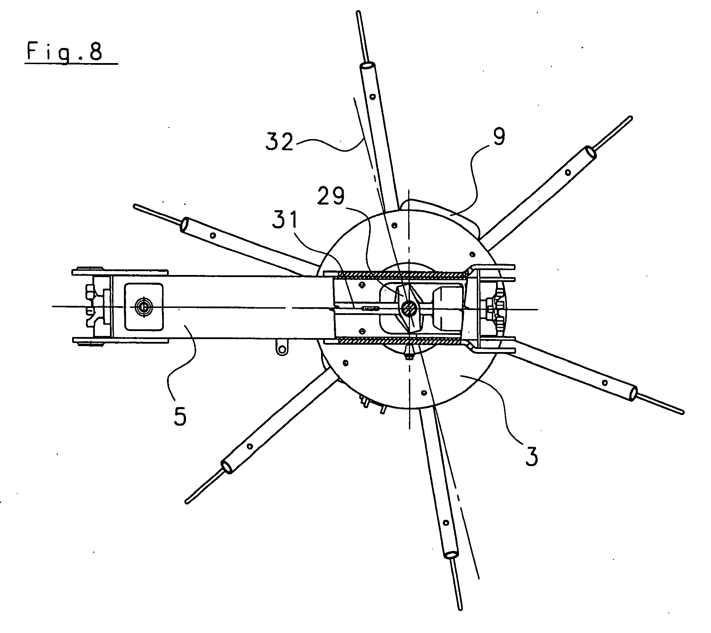

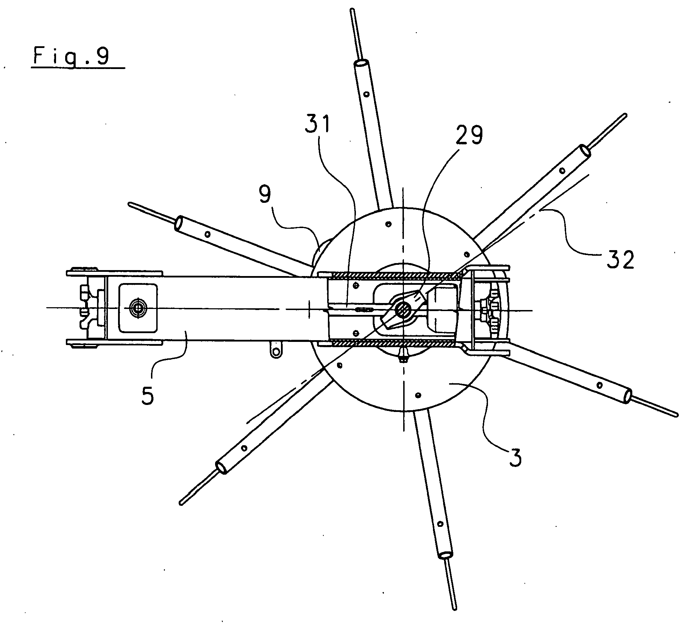

Bei einer weiteren erfindungsgemäßen Ausbildung einer Heuwerbungsmaschine 1 wird eine Kreiselrechenantriebswelle 31 von der im wesentlichen vertikal ausgebildeten Schwenkachse 29 zumindest teilweise umhüllt. Dieses wird durch eine Form der Schwenkachse 29 gewährleistet, die stimmgabelförmig auf zwei Seiten die Kreiselrechenantriebswelle 31 umfasst, so daß aufgrund des Abstandes der beiden stimmgabelförmigen Teile der Schwenkachse 29 zur Kreiselrechenantriebswelle 31 die Möglichkeit zur Schwenkbarkeit der Schwenkachse 29 gegeben ist. Die erfindungsgemäße Form dieser Stimmgabel bzw. der Schwenkachse 29 lässt eine Drehung der Achse 29 um in etwa-110° zu. Dieser Winkel lässt sich aus dem Unterschied der Lage einer Mittelachse 32 des Stimmgabelförmigen Bauteils, die im wesentlichen senkrecht zur Vertikalausrichtung der Schwenkachse 29 steht, in den Fig. 9 und 7 erkennen. Die erfindungsgemäße Überführbarkeit der Stützräder aus einer ersten Grenzstreuposition (Fig. 7) über eine zweite Grenzstreuposition (Fig. 8) hinaus in die Transportstellung (Fig. 9) ist nur dadurch zu realisieren, daß die Mittelachse 32 des Stimmgabelförmigen Bauteils in der Arbeitsstellung der quer zum Maschinenbalken stehenden Stützräder nicht in Fahrtrichtung zeigt, sondern um einen Winkel verschoben ist. Somit ist auch offensichtlich, daß der Maschinenbalken 2 zum Erreichen der ersten Grenzstreuposition aus der Arbeitsstellung mit im wesentlichen quer zur Fahrtrichtung stehenden Maschinenbalken in einem anderen Drehsinn schwenken, als zum Erreichen der zweiten Grenzstreuposition.

## Patentansprüche

1. Heuwerbungsmaschine (1), insbesondere zum Zetten und Wenden von Halmgut, mit an einem Maschinenbalken (2) angeordneten und mit über zumindest ein von einer Stellvorrichtung verschwenkbares Stützrad (8,9) auf dem Boden abgestützten Arbeitskreiseln (3), wobei beidseits des zentralen Maschinenbalkens (2) zwei seitliche Maschinenbalken (6, 7) aus einer sich quer zur Fahrtrichtung (11) erstreckenden Arbeitsstellung in eine im wesentlichen parallel zur Fahrtrichtung (11) ausgerichtete Transportstellung überführbar sind und an jedem seitlichen Maschinenbalken (6,7) zumindest zwei von einer Stellvorrichtung gelenkte Stützräder (9) vorgesehen sind, wobei die Enden einer Lenkstange (26) mit Hebelarmen (28) von in etwa vertikalen Schwenkachsen (29) der gelenkten Stützräder (9) verbunden sind und die von der Stellvorrichtung lenkbaren Stützäder (9) um ihre vertikalen Schwenkachsen (29) innerhalb eines Lenkwinkelbereiches von mehr als 90° auf vorgebbare Lenkwinkel einstellbar und in dieser Lenkwinkeleinstellung arretierbar sind.

2. Heuwerbungsmaschine nach Anspruch 1, **dadurch gekennzeichnet, dass** die seitlichen Maschinenbalken (6,7) in eine Arbeitsstellung verschwenkbar sind, die einen spitzen Winkel zur Fahrtrichtung einnimmt und dass die gelenkten Stützräder (9) in dieser Position auf einen Lenkwinkel von größer 90° einstellbar und arretierbar sind.

3. Heuwerbungsmaschine nach Anspruch 1 und 2, **dadurch gekennzeichnet, dass** die Schwenkachse (29) des gelenkten Stützrades (9) im Bereich einer Kreiselrechenantriebswelle (31) diese zumindest teilweise umhüllt, wobei das gelenkte Stützrad (9) mit Hilfe der Schwenkachse (29) von einer ersten Grenzstreuposition über eine zweite Grenzstreuposition hinaus in die Transportstellung verschwenkbar ist.

4. Heuwerbungsmaschine nach Anspruch 3, **dadurch gekennzeichnet, dass** zum Erreichen der ersten Grenzstreuposition aus einer im wesentlichen quer zur Arbeitsfahrtrichtung (11) befindlichen Position der seitlichen Maschinenbalken (6, 7) die gelenkten Stützräder (9) in einem anderen Drehsinn schwenken als zum Erreichen der zweiten Grenzstreuposition.

5. Heuwerbungsmaschine nach einem der Ansprüche 1 bis 4, **dadurch gekennzeichnet, dass** das gelenkte Stützrad (9) über den gesamten Lenkwinkelbereich stufenlos verschwenkbar ist.

6. Heuwerbungsmaschine nach einem der Ansprüche 1 bis 5, **dadurch gekennzeichnet, dass** die gelenkten Stützräder (9) nach der Überführung der seitlichen Maschinenbalken aus einer Arbeits- in eine Transportstellung durch zumindest eine Steuerungsvorrichtung automatisch in Fahrtrichtung (11) verschwenkbar sind.

7. Heuwerbungsmaschine nach einem der Ansprüche 3 bis 6, **dadurch gekennzeichnet, dass** in Arbeitsstellung in einer Draufsicht eine senkrecht zur vertikalen Erstreckung der Schwenkachse (29) liegende Mittelachse (32) der Schwenkachse (29) nicht mit der Fahrtrichtung (11) fluchtet.

8. Heuwerbungsmaschine nach einem der Ansprüche 1 bis 7, **dadurch gekennzeichnet, dass** zwei an einem seitlichen Maschinenbalken (6, 7) angeordnete lenkbare Stützräder (9) mit einer Lenk- oder Steuerungsvorrichtung verbunden sind, wobei die Lenkvorrichtung zumindest zwei mit jeweils einer horizontalen Schwenkachse (4) von in Einzeltragbalken (5) unterteilten seitlichen Maschinenbalken (6, 7) fluchtende Gelenke aufweist.

9. Heuwerbungsmaschine nach Anspruch 1, **dadurch gekennzeichnet, dass** die Hebelarme (28) mit der Lenkstange (26) durch Kugelgelenke (27) miteinander verbunden sind.

10. Heuwerbungsmaschine nach Anspruch 1, **dadurch gekennzeichnet, dass** ein doppelt wirkender Zylinder (16) zur Änderung des Lenkeinschlages der gelenkten Stützräder (9) an einem der Hebelarme (28) beweglich befestigt ist.

11. Heuwerbungsmaschine nach einem der Ansprüche 1 bis 10, **dadurch gekennzeichnet, dass** die gelenkten Stützräder (9) durch die Lenkvorrichtung der Heuwerbungsmaschine (1) während der Fahrt aktiv steuerbar ausgeführt sind.

12. Heuwerbungsmaschine nach Anspruch 11, **dadurch gekennzeichnet, dass** die aktiv lenkbaren Stützräder (9) in der Transportstellung zur Geradeausfahrt blockierbar sind.

13. Heuwerbungsmaschine nach einem der Ansprüche 11 oder 12, **dadurch gekennzeichnet, dass** die aktiv lenkbaren Stützräder (9) in der Arbeits- und Betriebsstellung zur Geradeausfahrt blockierbar sind.

14. Heuwerbungsmaschine nach einem der Ansprüche 1 bis 13, **dadurch gekennzeichnet, dass** die aktiv lenkbaren Räder (9) nach der Überführung der seitlichen Maschinenbalken (6, 7) in die Transportstellung durch eine Steuerungsvorrichtung automatisch in Fahrtrichtung verschenkbar sind.

15. Heuwerbungsmaschine nach einem der Ansprüche 1 bis 14, **dadurch gekennzeichnet, dass** in Fahrtrichtung vor und seitlich des Maschinenbalkens an diesem angebrachte Rahmenteile vorgesehen sind, welche als Schutzvorrichtung dienen, wobei in Transporstellung die als Zugstangenelement zur Aufnahme von in Arbeitsstellung auf den Maschinenbalken in Fahrtrichtung wirkenden Kräften ausgebildeten Rahmenteile mit den Gelenken (27) der Lenkvorrichtung der gelenkten Stützräder (9) und den horizontalen Schwenkachsen (4) fluchtende Gelenke aufweisen.

## Claims

1. Haymaking machine (1), particularly for tedding and turning stalked crops, having working rotors (3) which are arranged on a boom (2) of the machine and which are supported on the ground by at least one supporting wheel (8, 9) able to be pivoted by a positioning arrangement, two lateral booms (6, 7) of the machine being able to be transferred, on the two sides of the central part of the boom (2) of the machine, from a working position extending transversely to the direction of travel (11) to a position for transport aligned substantially parallel to the direction of travel (11), and at least two supporting wheels (9) steered by a positioning arrangement being provided on each lateral boom (6, 7) of the machine, the ends of a steering tie rod (26) being connected to lever arms (28) belonging to approximately vertical pivot shafts (29), having approximately vertical axes of pivot (29), of the steered supporting wheels (9), and the supporting wheels (9) able to be steered by the positioning arrangement being able to be set to presettable steering angles on their vertical axes of pivot (29) within a range of steering angles of more than 90° and being able to be locked at these set steering angles.

2. Haymaking machine according to claim 1, **characterised in that** the lateral booms (6, 7) of the machine can be pivoted to a working position which makes an acute angle with the direction of travel, and **in that** in this position the steered supporting wheels (9) can be set to a steering angle of more than 90° and locked there.

3. Haymaking machine according to claim 1 or 2, **characterised in that** the pivot shaft (29) of the steered supporting wheel (9) at least partly surrounds a drive shaft (31) of a rotary rake in the region of the said drive shaft (31) of a rotary rake, the steered supporting wheel (9) being able to be pivoted by means of the pivot shaft (29) to the position for transport from a first border tedding position to beyond a second border tedding position.

4. Haymaking machine according to claim 3, **characterised in that**, for the lateral booms (6, 7) of the machine to reach the first border tedding position from a position situated substantially transversely to the working direction of travel (11), the steered supporting wheels (9) pivot in a different direction of rotation from that allowing the second border tedding position to be reached.

5. Haymaking machine according to one of claims 1 to 4, **characterised in that** the steered supporting wheel (9) is pivotable steplessly through the entire range of steering angles.

6. Haymaking machine according to one of claims 1 to 5, **characterised in that**, the lateral booms of the machine having been transferred from a working position to a position for transport, the steered supporting wheels (9) can be pivoted automatically to the direction of travel (11) by at least one control arrangement.

7. Haymaking machine according to one of claims 3 to 6, **characterised in that**, in the working position, a centreline (32) of the pivot shaft (29), which centreline (32) is perpendicular to the vertical extent of the pivot shaft (29), is not in line with the direction of travel (11) in plan.

8. Haymaking machine according to one of claims 1 to 7, **characterised in that** two steerable supporting wheels (9) arranged on a lateral boom (6, 7) of the machine are connecting to a steering or control arrangement, the steering arrangement having at least two joints which line up with respective horizontal axes of pivot (4) of lateral booms (6, 7) of the machine, which lateral booms (6, 7) of the machine are divided into individual carrying bars (5).

9. Haymaking machine according to claim 1, **characterised in that** the lever arms (28) and the steering tie rod (26) are connected together by ball joints (27).

10. Haymaking machine according to claim 1, **characterised in that** a double-acting cylinder (16) for changing the steering angle of the steered supporting wheels (9) is movably fastened to one of the lever arms (28).

11. Haymaking machine according to one of claims 1 to 10, **characterised in that** the steered supporting wheels (9) are designed to be actively steerable during travel by the steering arrangement of the haymaking machine (1).

12. Haymaking machine according to claim 11, **characterised in that** the actively steerable supporting wheels (9) can be locked for straight-ahead travel in the position for transport.

13. Haymaking machine according to either of claims 11 and 12, **characterised in that** the actively steerable supporting wheels (9) can be locked for straight-ahead travel in the working and operating position.

14. Haymaking machine according to one of claims 1 to 13, **characterised in that**, after the lateral booms (6, 7) of the machine have been transferred to their position for transport, the actively steerable supporting wheels (9) can be pivoted automatically to the direction of travel by a control arrangement.

15. Haymaking machine according to one of claims 1 to 14, **characterised in that** frame members are provided which are mounted on the boom of the machine ahead thereof in the direction of travel and laterally thereof and which act as a protective arrangement, the frame members, which are designed to form traction-bar members to withstand forces which act on the boom of the machine in the direction of travel in the operating position, having joints which, in the position for transport, line up with the joints (27) of the steering arrangement for the steered supporting wheels (9) and with the horizontal axes of pivot (4).

## Revendications

1. Machine de fenaison (1), notamment pour épandre et retourner des produits en tige, comportant des rotors de travail (3) installés sur une poutre (2) de la machine et s'appuyant sur le sol par au moins une roue de sustentation (8, 9) pivotée par un dispositif de positionnement, machine qui
- de part et d'autre de la poutre centrale (2), comporte deux poutres latérales (6, 7) qui peuvent être transférées d'une position de travail dirigée transversalement à la direction de déplacement (11) dans une position de transport alignée pratiquement parallèlement à la direction de marche (11), et chacune des poutres latérales (6, 7) comporte au moins deux roues de sustentation guidées (9) par un dispositif de positionnement, et
- les extrémités d'une barre de guidage (26) sont reliées par des bras de levier (28), avec deux roues de sustentation guidées (9) par des axes de pivotement (29) sensiblement verticaux, et les roues de sustentation guidées (9) par le dispositif de positionnement peuvent être réglées autour de leur axe de pivotement vertical (29) sur un angle de guidage prédéfini dans une plage d'angle de guidage de plus de 90° et elles peuvent être bloquées dans cette position de guidage.

2. Machine de fenaison selon la revendication 1,
**caractérisée en ce que**
les poutres latérales (6, 7) de la machine sont pivotées dans une position de travail qui fait un angle aigu par rapport à la direction de marche et les roues de sustentation guidées (9), sont réglables dans cette position sur un angle supérieur à 90° et elles peuvent être bloquées dans cette position.

3. Machine de fenaison selon les revendications 1 et 2,
**caractérisée en ce que**
l'axe de pivotement (29) de la roue de sustentation guidées (9) enveloppe celles-ci au moins en partie dans la zone de l'arbre d'entraînement (31) du rotor râteleur, et la roue de sustentation guidée (9), est pivotée à l'aide de l'axe de pivotement (29) d'une première position limite d'étalement au-delà d'une seconde position d'étalement jusque dans la position de transport.

4. Machine de fenaison selon la revendication 3,
**caractérisée en ce que**
pour arriver dans la première position d'épandage à partir d'une position pratiquement transversale par rapport à la direction de marche (11) des poutres latérales (6, 7), les roues de sustentation (9), guidées, pivotent selon un autre sens de rotation que pour atteindre la seconde position d'épandage limite.

5. Machine de fenaison selon l'une des revendications 1 à 4,
**caractérisée en ce que**
la roue de sustentation guidée (9), pivote de façon continue dans toute la plage de l'angle de guidage.

6. Machine de fenaison selon l'une des revendications 1 à 5,
**caractérisée en ce qu'**
après le transfert des poutres latérales de la machine d'une position de travail dans la position de transport, les roues de sustentation guidées (9), sont pivotées automatiquement dans la direction de marche (11) par au moins un dispositif de commande.

7. Machine de fenaison selon l'une des revendications 3 à 6,
**caractérisée en ce qu'**
en vue de dessus, en position de travail, l'axe géométrique (32) de l'axe de pivotement (29) qui est perpendiculaire à la direction verticale de l'axe de pivotement (29) n'est pas aligné sur la direction de marche (11).

8. Machine de fenaison selon l'une des revendications 1 à 7,
**caractérisée en ce que**
deux roues de sustentation (9), guidées, installées sur une poutre latérale (6, 7) de la machine sont reliées à un dispositif de guidage ou de commande et ce dispositif de guidage comporte au moins deux articulations ayant chacune un axe de pivotement (4) horizontal, aligné, et faisant partie de tronçons de poutre de support (5) composant les poutres latérales (6, 7) de la machine.

9. Machine de fenaison selon la revendication 1,
**caractérisée en ce que**
les bras de levier (28) sont reliés à la barre de guidage (26) par des articulations à rotule (27).

10. Machine de fenaison selon la revendication 1,
**caractérisée par**
un vérin à double effet (16) fixé de manière mobile à l'un des bras de levier (28) pour modifier le braquage des roues de sustentation guidées (9).

11. Machine de fenaison selon l'une des revendications 1 à 10,
**caractérisée en ce que**
les roues de sustentation guidées (9), sont réalisées pour être commandées de manière active pendant la marche par le dispositif de guidage de la machine de fenaison (1).

12. Machine de fenaison selon la revendication 11,
**caractérisée en ce que**
les roues de sustentation (9), guidées de manière active sont bloquées en position de transport pour la marche en ligne droite.

13. Machine de fenaison selon l'une des revendications 11 ou 12,
**caractérisée en ce que**
les roues de sustentation (9), guidées de manière active sont bloquées en position de travail et en position de fonctionnement pour une marche en ligne droite.

14. Machine de fenaison selon l'une des revendications 1 à 13,
**caractérisée en ce que**
les roues de sustentation guidées (9), actives, après transfert des poutres latérales (6, 7) dans la position de transport, sont pivotées automatiquement dans la direction de marche par un dispositif de commande.

15. Machine de fenaison selon l'une des revendications 1 à 14,
**caractérisée en ce que**
la poutre de la machine comporte latéralement et en amont selon la direction de marche, des parties de châssis servant de dispositif protecteur et en position de transport, les parties de châssis réalisées sous la forme de barres de traction pour recevoir les efforts agissant dans la direction de marche lorsque les poutres de la machine, en position de travail, sont munies d'articulations alignées sur les articulations (27) du dispositif de guidage des roues de sustentation (9), guidées, et des axes de pivotement (4) horizontaux.
